# FASCICULE DE BREVET EUROPEEN

(11) **EP 0 542 584 B1**
(45) Date de publication et mention de la délivrance du brevet: **20.03.1996**
(21) Numéro de dépôt: 92402702.2
(22) Date de dépôt: 30.09.1992
(51) Int. Cl.: E21B 17/20, E21B 47/00, H01B 9/06, F16L 7/00, G01V 1/20

(54) **Tube flexible contenant une ligne de transfert d'énergie ou d'information centrée et procédé de production de ce tube**
Flexibles Rohr mit zentrierter Leitung zur Übertragung von Energie oder Information sowie Verfahren zur Herstellung dieses Rohres
Flexible tubing containing a centred line for transfer of energy or information and method of manufacturing such tubing

(30) Priorité: 13.11.1991 FR 9114064
(43) Date de publication de la demande: 19.05.1993
(73) Titulaire: INSTITUT FRANCAIS DU PETROLE, F-92502 Rueil-Malmaison (FR)
(72) Inventeur: Giannesini, Jean-Francois, F-92210 Saint Cloud (FR); Fay, Jean-Baptiste, F-75007 Paris (FR); Huvey, Michel, F-78380 Bougival (FR)

(56) Documents cités:
- WO-A-91/08098
- AU-A- 6 507 074
- DE-C- 937 172
- FR-A- 2 269 777
- US-A- 2 204 737
- US-A- 3 818 116

## Description

La présente invention concerne un dispositif, un procédé de montage et une application de ce dispositif permettant d'effectuer des mesures et/ou des interventions dans un puits au niveau des formations environnantes.

L'invention est notamment applicable lorsqu'il s'agit d'effectuer des mesures et/ou des interventions au niveau de formations géologiques traversées par un puits. Dans ce cas, les mesures effectuées peuvent comporter l'enregistrement de la pression et de la température de fond du puits, la mesure de la résistivité électrique, ainsi que des mesures acoustiques, nucléaires, etc.. On peut également opérer des canons de perforations, des outils de complétion ou des caméras de visualisation.

Ces techniques de mesures et/ou intervention sont bien connues des spécialistes et ne seront pas décrites ici plus en détail.

La présente invention est particulièrement bien adaptée pour effectuer des mesures et/ou interventions dans un puits de production pétrolière comportant un drain fortement incliné par rapport à la verticale ou même horizontal.

On connaît le document US-4685516 qui décrit un système de mesure ou d'intervention dans un puits comportant un tube métallique enroulé par déformation plastique (coil tubing) sur un touret, un câble de transmission électrique étant enfilé dans le tube. La mise en place d'un tel câble est problématique, car se faisant lorsque le tube est entièrement déroulé, le câble doit être tiré par un outil pompé dans le tube. De plus, lors des enroulements et déroulements à partir du touret, le câble a une mobilité longitudinale car son diamètre est plus faible que celui de l'intérieur du tube, il en résulte souvent des allongements qui peuvent s'accumuler en boucles à l'intérieur du tube pour, à terme, détériorer le câble lui même.

On connaît le brevet FR-2631708 qui décrit un dispositif de mesure et d'intervention dans un puits, qui perfectionne la technique en utilisant une tige en matériau polymérique incorporant la ligne. Mais la tige divulguée dans ce document présente l'inconvénient d'une rigidité telle que le diamètre de touret est trop encombrant. De plus, pratiquement cette tige n'autorise plus le pompage de fluide.

La présente invention concerne un dispositif pour effectuer des mesures et/ou des interventions dans un puits foré comportant un tube du type "coil tubing" adapté à être enroulé sur un touret, un instrument de mesure et/ou d'intervention disposé à l'extrémité inférieure dudit tube, ledit tube comportant intérieurement au moins une ligne adaptée au transfert d'énergie ou d'information. Un tel dispositif est connu du document US-A-4 685 516 cité ci-dessus.

La ligne est incluse dans une tige comportant un matériau polymérique et des fibres de renfort.

La ligne est sensiblement centrée dans ledit tube par ladite tige.

La tige est élastique en flexion et sa résistance à la compression est adaptée à permettre son introduction dans ledit tube notamment par poussée.

La tige peut avoir une section transversale adaptée à laisser libre un conduit permettant à un fluide de circuler à travers ledit tube.

La tige peut comporter un noyau en matériau polymèrique et fibres de renfort, ledit noyau étant enrobé dans une enveloppe comportant un matériau polymérique ayant un allongement à la rupture plus grand que celui dudit noyau.

Le noyau peut comporter des fibres de verre, de carbone ou de polyaramide noyées dans une matrice en résine thermoplastique ou thermodurcissable.

Préférentiellement, le noyau peut comporter des fibres de verre noyées dans au moins une des résines suivantes : époxyde, polyester insaturé, phénolique ou vinylester.

L'enveloppe peut comporter au moins un des polymères suivants : polyamide, polyfluorure de vinylidène, polyoléfine réticulé ou non, polychlorure de vinyle, polysulfone, polyoxyde de phénylène ou polysulfure de phényle.

Le matériau de ladite enveloppe peut comporter des charges adaptées à diminuer le coefficient de frottement et/ou l'usure entre ladite tige et l'intérieur dudit tube.

La tige peut être adaptée à résister aux fluides destinés aux opérations d'acidification.

La section transversale de ladite tige peut avoir sensiblement une forme d'étoile comportant au moins trois branches et ladite section peut être inscrite dans un cercle de diamètre sensiblement inférieur au diamètre intérieur dudit tube.

L'invention concerne également un procédé d'assemblage du dispositif selon l'invention comportant les étapes suivantes :
- on déroule le tube de son touret de stockage,
- on fabrique ladite tige par pultrusion et/ou extrusion en incorporant ladite ligne,
- on pousse ladite tige dans ledit tube au moyen d'un organe de poussée adapté à ladite tige,
- on enroule sur un touret le tube comportant intérieurement la tige.

Dans ce procédé, on peut maintenir le tube rempli d'un fluide pendant l'introduction de ladite tige dans ledit tube.

L'invention fournit également une application du dispositif à un puits pétrolier comportant une partie fortement déviée par rapport à la verticale.

L'invention sera mieux comprise et ses avantages apparaîtront plus clairement à la lecture de la description qui suit, d'exemples nullement limitatifs, illustrés par les figures annexées parmi lesquelles:
- la figure 1 représente un dispositif selon l'invention lors de sa mise en place dans le puits,
- la figure 2 représente une section du tube comportant intérieurement la tige suivant un mode de réalisation préférentiel,
- la figure 3 représente le tube et une autre section de tige,
- la figure 4 représente le procédé d'introduction ou de sortie de la tige dans le tube,
- la figure 5 représente la disposition pour, en même temps, retirer la tige d'un tube usagé et introduire celle-ci dans un tube neuf.

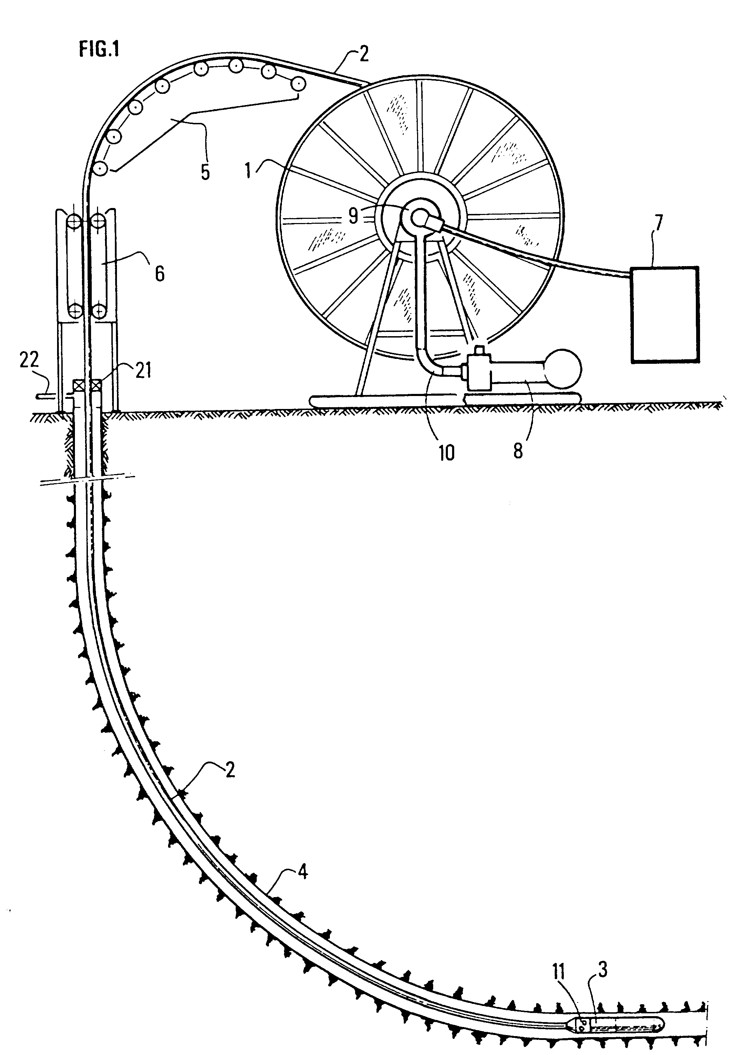

Sur la figure 1, la référence 1 indique le touret sur lequel est enroulé un tube 2 qui sert aux déplacement de l'instrument 3 dans le puits 4, de manière à effectuer les mesures et/ou interventions dans une ou plusieurs zones du puits 4.

Le tube 2 quitte le touret 1 en passant sur un organe de renvoi 5, tel un ensemble de poulies, adapté à positionner le tube dans l'axe du puits quelle que soit la position du touret et son remplissage, et traverse des moyens de traction et de poussée adaptés à pousser le tube 2 dans le puits, à le retenir ou à l'en extraire.

Ces moyens 6 de traction et de poussée peuvent, par exemple, être constitués de deux chenilles en caoutchouc enserrant le tube 2 et se déplaçant dans le sens souhaité pour le manoeuvrer.

Le tube 2, qui est résistant à la compression de manière à permettre une poussée sur l'instrument 3, est réalisée en un nombre très limité de tronçons et préférentiellement peut n'en comporter qu'un.

Le tube 2 comporte au moins une ligne adaptée au transfert d'énergie et/ou d'informations, telle une, ou plusieurs, ligne électrique, fluidique ou optique, qui permet de relier l'instrument 3 disposé à l'extrémité inférieure du tube 2 à la surface où se trouve l'extrémité supérieure du tube 2. A cette extrémité supérieure sont reliés, éventuellement par l'intermédiaire d'un connecteur tournant, des appareils 7 de contrôle et/ou de commande de l'instrument 3.

L'extrémité supérieure du tube est en communication avec une installation de pompage 8 par une conduite 10 et un joint tournant 9, de façon à ce que cette installation de pompage puisse injecter un fluide dans le conduit laissé libre entre la tige et l'intérieur dudit tube.

Un raccord de circulation 11 est disposé en général entre l'outil 3 et l'extrémité inférieure du tube afin de mettre en communication le conduit intérieur du tube avec l'espace annulaire entre le tube 2 et la paroi du puits. Le dispositif selon l'invention permet donc de faire circuler un fluide de la surface vers le fond du puits.

L'installation de surface représentée sur la figure 1 peut être complétée par un système d'étanchéité 21 disposé autour du tube et fixé sur la tête du puits 4. Une canalisation 22 communique avec le puits 4 en dessous de l'étanchéité annulaire 21 et permet d'injecter ou de collecter un fluide dans ou provenant de l'annulaire puits/tige.

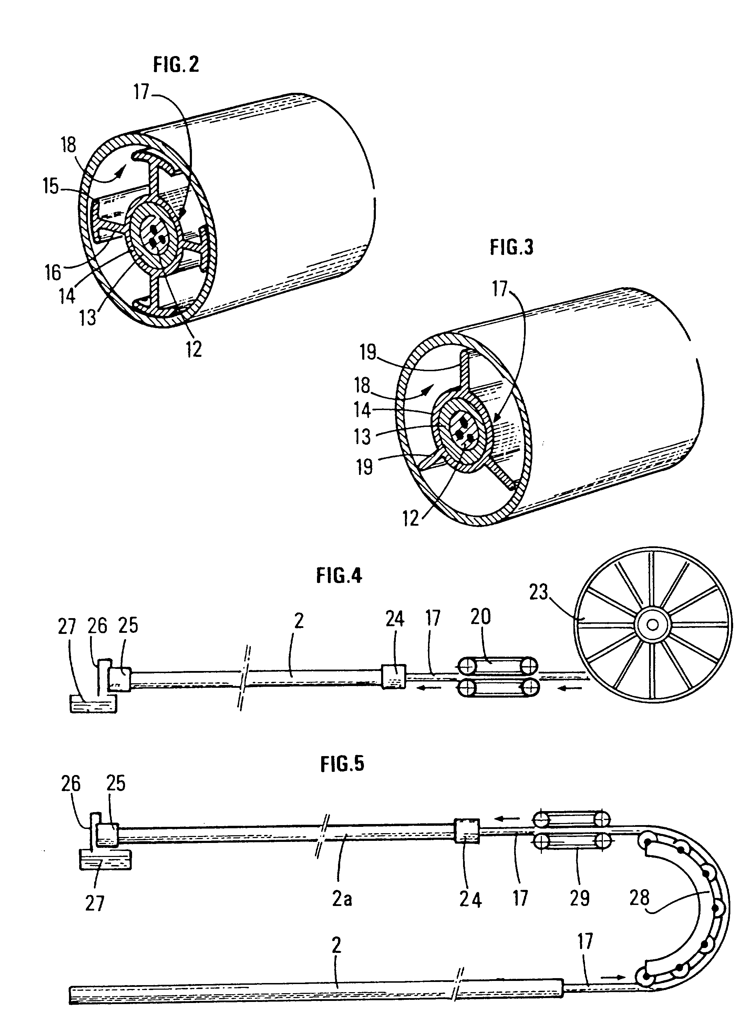

La figure 2 montre une coupe du tube 2 comportant une tige 17 dans son espace interne.

La tige 17 comporte sensiblement dans son centre une ligne 12 adaptée au transfert d'énergie ou d'informations électriques. Cette ligne est incluse dans un noyau 13 pendant la fabrication de ce même noyau par pultrusion ou extrusion comme cela est décrit dans le document FR-2631708.

Le noyau 13 peut être réalisé dans un matériau composite comportant des fibres de renfort enrobées dans une matrice en résine thermoplastique ou thermodurcissable.

La nature des fibres peut être choisie parmi les fibres de verre, de carbone ou de polyaramide.

La résine peut être choisie parmi les résines époxyde, phénolique, polyester insaturé ou vinylester.

La forme du extérieure du noyau sera sensiblement cylindrique et son diamètre sera tel que la déformation induite par l'enroulement du tube sur le touret ne génère que des contraintes inférieures à la limite élastique du matériau du noyau. Par exemple, et compte tenu que les diamètres usuels des tourets avoisinent 2 mètres, le diamètre du noyau ne sera pas supérieur à environ 17 millimètres lorsqu'il est fabriqué en résine époxyde armée par des fibres de verre.

Bien entendu, la section du noyau sera compatible avec les efforts longitudinaux que doit subir la tige dans le tube au cours des enroulements hors du puits et des déroulements dans le puits.

Les dimensions du tube 2 sont les dimensions standards des tubes (coil tubing) adaptés à être enroulés sur touret, soit entre 1 et 2 pouces de diamètre extérieur (2,54 à 5,08 cm). Les dimensions les plus courantes étant 1", 1 1/4" et 1 1/2" ( 2,54, 3,18 et 3,81 cm).

Les diamètres intérieurs des tubes 1 1/4" et 1 1/2" sont respectivement de 1,076" (2,733 cm) et 1,282" (3,256 cm).

Les tourets ont une capacité courante entre 15000 à 18000 pieds (4572 à 5486 m).

La ligne 12 est un câble mono ou multiconducteur.

Le noyau 13 est enrobé dans une enveloppe 14 en matériau polymérique mais ne possédant pas en général de fibres de renfort car l'allongement à la rupture de ce matériau doit être supérieur à celui du matériau du noyau, afin que l'enveloppe puisse subir des efforts de flexion dans le domaine élastique.

L'enveloppe 14 comporte une partie cylindrique entourant le noyau et quatre profilés de centrage 15 disposés à 90° autour de ladite enveloppe. Les extrémités de ces profilés de centrage se terminent en T 16. La forme en T des profilés de centrage améliore le centrage de la tige 17 dans le tube 2 tout en diminuant la pression de contact de la tige contre la paroi interne du tube grâce à la forme élargie 16 du profilé de centrage 15.

La tige 17 laisse libre un espace 18 à l'intérieur du tube 2, espace qui est mis à profit pour faire circuler par pompage un fluide entre la surface et l'autre extrémité du tube 2 par l'intermédiaire du raccord de circulation 11.

La matière de l'enveloppe sera choisie en fonction des conditions d'ambiance (température, fluide, contraintes) auxquelles elle sera soumise, et de la méthode de mise en place dans le tube qui peut nécessiter des coefficients de friction faibles. Ces matériaux peuvent notamment être du type polyamide, polyfluorure de vinylidène, polyoléfine réticulé ou non, polychlorure de vinyle, polysulfone, polyoxyde de phénylène ou polysulfure de phényle.

Dans le cas où la tige 17 est mise en présence d'acide, l'enveloppe 14 est adaptée à ce que son matériau résiste aux acides et protège le noyau et plus particulièrement les fibres de renfort d'une attaque chimique.

La figure 3 représente une autre forme d'enveloppe 14 en forme d'étoile à trois branches 19. Le noyau 13 et la ligne 12 incluse dans le noyau sont centrés dans le tube 2 tout en laissant libre un conduit de circulation 18.

Ces exemples de forme extérieure de la tige 17 ne sauraient être limitatifs. D'autres formes sont couvertes par le présent texte du moment que les fonctions de la tige selon l'invention s'y retrouvent d'une manière équivalente.

D'un point de vue de fabrication par extrusion ou pultrusion, l'enveloppe sera dessinée préférentiellement à épaisseur sensiblement constante. Cette caractéristique est bien connue de l'art de la transformation des matières plastiques à travers une filière. Cela veut dire que les épaisseurs autour du noyau, des bras 15 ou 19 et du T 16 doivent être équivalentes pour que la filière fonctionne correctement avec une vitesse de défilement à travers cette filière acceptable.

De plus, on ne sortira pas du cadre de cette invention si l'enveloppe et le noyau sont fabriqués dans le même matériau, mais avec une disposition particulière des fibres de renfort.

La figure 4 schématise la mise en place de la tige 17 dans un tube 2.

Le tube 2 a été déroulé de son touret pour être disposé d'une manière sensiblement rectiligne. Sur une extrémité du tube, on a fixé un moyen d'étanchéité 24 destiné à faire étanchéité au moins partielle, entre la tige 17 introduite et le tube 2. A l'autre extrémité un bouchon 25 obture le tube mais comporte une canalisation 26 de purge. La canalisation 26 de purge permet un vidage partiel du fluide contenu dans le tube 2.

En effet, pour faciliter la poussée de la tige 17 dans le tube 2, au moyen d'un organe de poussée ou de traction 20, il peut être souhaitable de remplir totalement le tube d'un fluide. L'action de ce fluide est d'alléger la tige dans le tube et de diminuer les efforts de friction développés par le frottement des profilés de centrage de la tige sur la paroi intérieure du tube.

La canalisation de purge 26 maintient le tube plein tout en vidant le tube du volume de fluide remplacé par le volume de la tige 17 introduite dans ledit tube.

Le fluide aura principalement des propriétés antifriction mais de plus, sa masse volumique pourra être telle que la diminution du poids apparent de la tige 17 soit notable. En effet, lorsque la tige "flotte" dans le tube, les frottements sont sensiblement diminués.

Si la longueur du tube ne l'impose pas, il est toutefois possible de faire pénétrer la tige 17 dans le tube 2 vide de tout liquide.

Le touret 23 de la figure 4 comporte enroulée la tige 17. Le déroulement du touret est contrôlé par l'organe de traction ou de poussée 20 qui peut être une autre utilisation de l'organe 6 de la figure 1 ou un système équivalent.

La disposition sensiblement rectiligne est préférable pour faciliter l'introduction de la tige 17 dans le tube 2, mais elle n'est pas indispensable si les courbures que peut présenter le tube ne sont pas incompatibles avec cette méthode de mise en place.

D'autre part, on peut disposer le tube à la verticale si on possède un puits dans lequel il est possible d'introduire sensiblement verticalement toute la longueur du tube que l'on souhaite équiper de la tige 17.

La figure 5 représente une opération avantageuse d'une nouvelle utilisation d'une tige 17 ayant déjà été introduite dans un tube 2. Le dispositif selon l'invention a été utilisé jusqu'à ce que l'usure ou la fatigue du tube enroulé soit inacceptable. Il faut alors réformer le tube 2, mais la tige 17, qui n'a subit que des contraintes élastiques, peut être utilisée à nouveau, à moins d'accidents survenus en cours d'opération, notamment sur la ligne de transmission.

Le dispositif est déroulé du touret de stockage, parallèlement à un tube neuf 2A. On tire la tige 17 du tube 2 par le moyen de l'organe de traction et de poussée 29. La tige 17 passe sur un guide à rouleaux 28 avant d'être introduite par poussée dans le nouveau tube 2a, par le moyen du même organe de poussée 29. Ce tube 2a est équipé du même moyen d'étanchéité 24, de l'obturateur 25 et du système de purge 26 et 27, tel la figure 4.

## Revendications

1. Dispositif pour effectuer des mesures et/ou des interventions dans un puits (4) foré comportant un tube (2) du type "coil tubing" adapté à être enroulé sur un touret (1), un instrument (3) de mesure et/ou d'intervention disposé à l'extrémité inférieure dudit tube (2), ledit tube comportant intérieurement au moins une ligne (12) adaptée au transfert d'énergie ou d'information, caractérisé en ce que ladite ligne (12) est incluse dans une tige (17) comportant un matériau polymérique et des fibres de renfort, en ce que ladite ligne (12) est sensiblement centrée dans ledit tube par ladite tige (17), en ce que ladite tige est élastique en flexion et en ce que sa résistance à la compression est adaptée à permettre son introduction dans ledit tube (2) notamment par poussée.

2. Dispositif selon la revendication 1, caractérisé en ce que ladite tige (17) a une section transversale adaptée à laisser libre un conduit (18) permettant à un fluide de circuler à travers ledit tube (2).

3. Dispositif selon l'une des revendications précédentes, caractérisé en ce que ladite tige (17) comporte un noyau (13) en matériau polymérique et fibres de renfort, ledit noyau (13) étant enrobé dans une enveloppe (14, 15, 16) comportant un matériau polymérique ayant un allongement à la rupture plus grand que celui dudit noyau.

4. Dispositif selon l'une des revendications précédentes, caractérisé en ce que le noyau (13) comporte des fibres de verre, de carbone ou de polyaramide noyées dans une matrice en résine thermoplastique ou thermodurcissable.

5. Dispositif selon la revendication 4, caractérisé en ce que ledit noyau comporte des fibres de verre noyées dans au moins une des résines suivantes : époxyde, polyester insaturé, phénolique ou vinylester.

6. Dispositif selon l'une des revendications précédentes, caractérisé en ce que ladite enveloppe (14, 15, 16) comporte au moins un des polymères suivants : polyamide, polyfluorure de vinylidène, polyoléfine réticulé ou non, polychlorure de vinyle, polysulfone, polyoxyde de phénylène ou polysulfure de phényle.

7. Dispositif selon la revendication 6, caractérisé en ce que le matériau de ladite enveloppe comporte des charges adaptées à diminuer le coefficient de frottement et/ou l'usure entre ladite tige et l'intérieur dudit tube.

8. Dispositif selon l'une des revendications précédentes, caractérisé en ce que ladite tige est adaptée à résister aux fluides destinés aux opérations d'acidification.

9. Dispositif selon l'une des revendications précédentes, caractérisé en ce que la section transversale de ladite tige a sensiblement une forme d'étoile comportant au moins trois branches (16 ; 19) et en ce que ladite section s'inscrit dans un cercle de diamètre sensiblement inférieur au diamètre intérieur dudit tube.

10. Procédé d'assemblage du dispositif selon l'une des revendications précédentes, caractérisé en ce qu'il comporte les étapes suivantes :
- on déroule le tube (2) de son touret (23) de stockage,
- on fabrique ladite tige (17) par extrusion et/ou pultrusion en incorporant ladite ligne (12),
- on pousse ladite tige (17) dans ledit tube (2) au moyen d'un organe de poussée (6 ; 19, 20) adapté à ladite tige,
- on enroule sur un touret (1) le tube comportant intérieurement la tige.

11. Procédé selon la revendication 10, caractérisé en ce que l'on maintient ledit tube rempli d'un fluide pendant l'introduction de ladite tige dans ledit tube.

12. Application du dispositif selon l'une des revendications 1 à 9, à un puits pétrolier (4) comportant une partie fortement déviée par rapport à la verticale.

## Patentansprüche

1. Vorrichtung zur Durchführung von Messungen und/oder Eingriffsvorgängen in einem Bohrloch (4), umfassend: ein Rohr (2) vom Typ "coil tubing", derartiger Auslegung, das es auf einen Haspel (1) gewickelt werden kann und ein Meß- und/oder Eingriffsinstrument (3), das am unteren Ende dieses Rohrs (2) angeordnet ist, wobei dieses Rohr innen wenigstens eine Leitung (12) umfaßt, die für die Energie- oder Informationsübertragung ausgelegt ist, dadurch gekennzeichnet, daß diese Leitung (12) in eine Stange (2) eingeschlossen ist, die ein Polymermaterial sowie Verstärkungsfasern umfaßt, daß diese Leitung (12) im wesentlichen in diesem Rohr durch diese Stange (17) zentriert ist, daß diese Stange biegeelastisch ist und daß ihr Widerstand gegen Kompression so ausgelegt ist, daß ihre Einführung in dieses Rohr (2) insbesondere durch Schub möglich wird.

2. Vorrichtung nach Anspruch 1, dadurch gekennzeichnet, daß diese Stange (17) einen Querschnitt einer Ausbildung derart hat, daß eine Leitung (18) frei gelassen wird, die es einem Fluid ermöglicht, durch dieses Rohr (2) zu zirkulieren.

3. Vorrichtung nach einem der vorhergehenden Ansprüche, dadurch gekennzeichnet, daß diese Stange (17) einen Kern (13) aus Polymermaterial und Verstärkungsfasern umfaßt, wobei dieser Kern (13) in einen Mantel (14, 15, 16) eingehüllt ist, der ein Polymermaterial umfaßt, das eine Längung bei Reißen aufweist, die größer als die dieses Kerns ist.

4. Vorrichtung nach einem der vorhergehenden Ansprüche, dadurch gekennzeichnet, daß der Kern (13) Glas-, Kohlenstoff- oder Polyaramidfasern umfaßt, die in eine Matrix aus thermoplastischem oder in der Wärme härtbarem Harz eingegossen sind.

5. Vorrichtung nach Anspruch 4, dadurch gekennzeichnet, daß dieser Kern Glasfasern umfaßt, die in wenigstens eines der folgenden Harze eingebettet sind: Epoxid, ungesättigter Polyester, Phenolharz oder Vinylester.

6. Vorrichtung nach einem der vorhergehenden Ansprüche, dadurch gekennzeichnet, daß dieser Mantel (14, 15, 16) wenigstens eines der folgenden Polymere umfaßt: Polyamid, Polyvinylidenfluorid, gegebenenfalls vernetztes Polyolefin, Polyvinylchlorid, Polysulfon, Polyphenylenoxid oder Polyphenylsulfid.

7. Vorrichtung nach Anspruch 6, dadurch gekennzeichnet, daß das Material dieses Mantels Chargen bzw. Füllstoffe umfaßt, die so eingerichtet sind, daß sie den Reibungs- und/oder Verschleißkoeffizienten zwischen dieser Stange und dem Inneren dieses Rohres vermindern.

8. Vorrichtung nach einem der vorhergehenden Ansprüche, dadurch gekennzeichnet, daß diese Stange so ausgelegt ist, daß sie beständig gegen Fluide ist, die für Säurerungsmaßnahmen bestimmt sind.

9. Vorrichtung nach einem der vorhergehenden Ansprüche, dadurch gekennzeichnet, daß der Querschnitt dieser Stange im wesentlichen eine Sternform mit wenigstens drei Zacken (16; 19) hat und daß dieser Querschnitt in einen Kreis von einem Durchmesser einbeschrieben ist, der wesentlich kleiner als der Innendurchmesser dieses Rohres ist.

10. Verfahren zum Montieren der Vorrichtung nach einem der vorhergehenden Ansprüche, dadurch gekennzeichnet, daß es die folgenden Stufen umfaßt:
- man wickelt das Rohr (2) von seinem Speicherhaspel (23) ab,
- man stellt dieses Rohr (17) durch Extrusion und/oder Pultrusion her, indem man diese Leitung (12) einarbeitet,
- man schiebt diese Stange (17) in dieses Rohr (2) vermittels eines Schuborgangs (6; 19, 20), das an diese Stange angepaßt ist,
- man wickelt das innen die Stange umfassende Rohr auf einen Haspel (1).

11. Verfahren nach Anspruch 10, dadurch gekennzeichnet, daß man dieses mit einem Fluid gefüllte Rohr während des Einführens der Querstange in dieses Rohr gefüllt hält.

12. Anwendung der Vorrichtung nach einem der Ansprüche 1 bis 9 auf ein Erdölbohrloch (4), das einen bezogen auf die Vertikale stark abgelenkten Teil umfaßt.

## Claims

1. Device for carrying out measuring and/or servicing operations in a well bore (4) comprising a tube (2) of the "coil tubing" type designed to be wound on a reel (1), a measuring and/or servicing instrument (3) arranged at the lower end of the said tube (2), the said tube having inside it at least one line (12) designed for the transmission of power or data, characterised in that the said line (12) is incorporated in a rod (7) made from a polymer material with reinforcing fibres, in that the said line (12) is retained essentially centred inside the said tube by the said rod (17), in that the said rod is elastic in bending and in that its resistance to compression is adjusted so as to allow it to be inserted inside the said tube (2) by pushing.

2. Device as claimed in claim 1, characterised in that the said rod (17) has a cross-section designed so as to leave a passageway (18) free to allow a fluid to be circulated through the said tube (2).

3. Device as claimed in one of the previous claims, characterised in that the said rod (17) has a core (13) made from polymer material and reinforcing fibres, the said core (13) being embedded in a sheath (14, 15, 16) made from a polymer material and having a ductile strength greater than that of the core.

4. Device as claimed in one of the previous claims, characterised in that the core (13) contains glass, carbon or polyaramide fibres embedded in a matrix of thermoplastic or thermosetting resin.

5. Device as claimed in claim 4, characterised in that the said core has glass fibres embedded in at least one of the following resins: epoxy, unsaturated polyester, phenolic or vinylester.

6. Device as claimed in one of the previous claims, characterised in that the said sheath (14, 15, 16) contains at least one of the following polymers: polyamide, polyvinylidene fluoride, cross-linked or non-cross-linked polyolefin, polyvinyl chloride, polysulfone, polyphenylene oxide or polyphenyl sulphide.

7. Device as claimed in claim 6, characterised in that the material of the said sheath contains fillers selected to reduce the coefficient of friction and/or wear between the rod and the interior of the said tube.

8. Device as claimed in one of the previous claims, characterised in that the said rod is designed to resist fluids that might be used in acidification operations.

9. Device as claimed in one of the previous claims, characterised in that the cross-section of the said rod is essentially formed in a star shape having at least three branches (16; 19) and in that the said section can be inscribed within a circle of a diameter essentially smaller than that of the internal diameter of the tube.

10. Method for assembling the device as claimed in one of the previous claims, characterised in that it comprises the following steps:
- the tube (2) is unwound from its storage reel (23),
- the said rod (17) is manufactured by extrusion and/or pultrusion incorporating the said line (12),
- the rod (17) is pushed inside the tube (2) by means of a thrust member (6; 19, 20) designed to match the tube,
- the tube with the line inside it is wound onto a reel (1).

11. Method as claimed in claim 10, characterised in that the said tube is kept filled with a fluid whilst the said rod is being inserted inside the said tube.

12. Application of the device of any one of claims 1 to 9 to an oil well (4) having a portion that is sharply inclined relative to the vertical.
